# EUROPEAN PATENT SPECIFICATION

(11) **EP 2 891 564 B1**
(45) Date of publication and mention of the grant of the patent: **14.06.2017**
(21) Application number: 14159784.9
(22) Date of filing: 14.03.2014
(51) Int. Cl.: B60C 23/04

(54) **Tire pressure sensor device setting method**
Verfahren zur Einstellung einer Reifendrucksensorvorrichtung
Procédé de réglage de dispositif de capteur de pression de pneu

(30) Priority: 07.01.2014 TW 103100543
(43) Date of publication of application: 08.07.2015
(73) Proprietor: CUB Elecparts Inc., Changhua County (TW)
(72) Inventor: Yu, San-Chuan, Changhua County (TW); Wang, Tsan-Nung, Changhua County (TW); Hu, Chao-Ching, Tainan City (TW); Chen, Chi-Hung, Changhua County (TW)
(74) Representative: Becker Kurig Straus

(56) References cited:
- US-A1- 2003 227 379
- US-A1- 2012 268 263

## Description

### BACKGROUND OF THE INVENTION

### 1. Field of the Invention

The present invention relates to tire pressure monitoring technology and more particularly, to a method for setting a tire pressure sensor device.

### 2. Description of the Related Art

To improve driving safety, a vehicle may be equipped with a tire pressure monitoring system. A tire pressure sensor device is adapted to detect various statuses of the respective tire, such as temperature, pressure, and etc., and then to transmit detected data to an on-vehicle main unit in the motor vehicle in a wireless manner, so that the driver can know the current status of every tire of the motor vehicle. Sensor ICs are commonly used for sensing tire pressure and temperature. A sensor IC for tire pressure monitoring system may have a G sensor built therein for measuring the amount of acceleration of the motor vehicle; however, the data provided by the G sensor cannot be used to determine the location of the tire.

Some commercial tire pressure sensor devices have a particular design for determining tire location. For example, a multi-axis G sensor can be installed in a tire pressure sensor device to measure the amount of acceleration in two or three axes for calculation so that the location of the tire pressure sensor device can be determined. A mechanical tilting or moving mechanism can also be used to help determine the location of the tire pressure sensor device. However, the application of these conventional methods needs to install an additional structure or device in the tire pressure sensor device for the determination of individual location. Currently there is no any other convenient method for determining the location of each individual tire. The patent application publication US 2003/0227379 A1 discloses a sensor device setting method, according to the preamble of claim 1, but said document does not determine any tire location code in said sensor device.

### SUMMARY OF THE INVENTION

The present invention has been accomplished under the circumstances in view. It is the main object of the present invention to provide a tire pressure sensor device setting method, which enables the on-vehicle main unit to rapidly determine the left-sided or right-sided location of the tire that carries the tire pressure sensor device.

To achieve this and other objects of the present invention, a tire pressure sensor device setting method includes the step of providing a tire pressure sensor device setting tool that comprises a user interface for operation by a user, the step of operating the tire pressure sensor device setting tool to select vehicle brand, vehicle model and model year, the step of inputting the ID (identification) code of the tire pressure sensor device to be set into the tire pressure sensor device setting tool, the step of selecting the option of right-sided tire or left-sided tire, the step of tire pressure sensor setting tool editing the data of vehicle brand, vehicle model and model year, the data of the ID code of the tire pressure sensor device and the content of the data of the selected option of right-sided tire or left-sided tire into a communication protocol, and the step of writing the communication protocol into the tire pressure sensor device.

Other advantages and features of the present invention will be fully understood by reference to the following specification in conjunction with the accompanying drawings, in which like reference signs denote like components of structure.

### BRIEF DESCRIPTION OF THE DRAWINGS

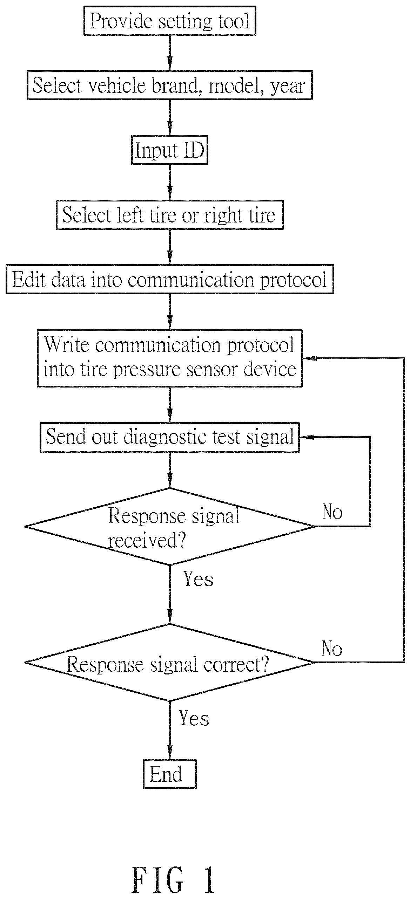

FIG. 1 is an operational flow chart of a tire pressure sensor device setting method in accordance with the present invention.

### DETAILED DESCRIPTION OF THE INVENTION

Referring to FIG. 1, a tire pressure sensor device position setting method in accordance with the present invention comprises the steps stated below.

At first provide a setting tool having a user interface through which a user can set the setting tool.

Thereafter, operate the setting tool to select the vehicle brand, vehicle model and model year without sequential constraints.

Thereafter, input the ID (identification) code of the tire pressure sensor device into the setting tool after selection of the vehicle brand, vehicle model and model year. Inputting the ID code can be achieved in any of a variety of known techniques. A wireless ID code reading technique or optical barcode scanning technique can be employed, enabling the setting tool to get the ID code of the tire pressure sensor device. Alternatively, the ID code of the tire pressure sensor device can be inputted into the setting tool manually.

After inputted the ID code of the tire pressure sensor device into the setting tool, select the option of Right-sided or Left-sided. This option selection procedure is to determine the tire pressure sensor device to be installed on the left or right side of the vehicle. After selection of the option, the setting tool will then edit the data of vehicle brand, vehicle model and model year, the ID code of the tire pressure sensor device and the content of the selected option into a communication protocol. Further, the step of operating the setting tool to select the vehicle brand, vehicle model and model year and the step of inputting the ID (identification) code of the tire pressure sensor device into the setting tool are sequentially exchangeable, i.e., the user can input the ID (identification) code of the tire pressure sensor device into the setting tool at first, and then operate the setting tool to select the vehicle brand, vehicle model and model year.

Thereafter, write the communication protocol into the tire pressure sensor device. Writing the communication protocol into the tire pressure sensor device can be done by using a cable to load the communication protocol onto the tire pressure sensor device. Alternatively, a wireless transmission technique can be employed to transmit the communication protocol from the setting tool to the tire pressure sensor device.

After loading of the communication protocol on the tire pressure sensor device, the setting tool will give a diagnostic test signal to the tire pressure sensor device. After received the diagnostic test signal, the tire pressure sensor will send a response signal back to the setting tool. This response signal contains the ID code of the tire pressure sensor, the temperature and pressure data measured by the tire pressure sensor device and the Right-sided or Left-sided setting data. Thus, subject to the content of the response signal, the setting tool can determine whether the setting of the tire pressure sensor device is completed.

The tire pressure sensor device setting method of the present invention facilitates quick setting of a tire pressure sensor device in a left or right tire of a motor vehicle. Subject to the application of the tire pressure sensor device setting method of the present invention, a tire pressure sensor device manufacturer needs not to install any additional means in a tire pressure sensor device for identification of left-sided or right-sided mounting application. Therefore, the invention effectively improves the problem of conventional techniques in determining the left-sided or right-sided mounting location of a tire pressure sensor device.

## Claims

1. A tire pressure sensor device setting method, comprising the steps of:
(a) providing a tire pressure sensor device setting tool that comprises a user interface for operation by a user;
(b) operating said tire pressure sensor device setting tool to select vehicle brand, vehicle model and model year;
(c) inputting the ID (identification) code of the tire pressure sensor device to be set into said tire pressure sensor device setting tool;
(d) selecting the option of right-sided tire or left-sided tire; said tire pressure sensor device setting method being further **characterized by** comprising the following steps :
(e) said tire pressure sensor device setting tool editing the data of vehicle brand, vehicle model and model year, the ID code of said tire pressure sensor device and the content of the selected option of right-sided tire or left-sided tire into a communication protocol; and
(f) writing said communication protocol into said tire pressure sensor device.

2. The tire pressure sensor device setting method as claimed in claim 1, wherein the step of inputting the ID (identification) code of said tire pressure sensor device to be set into said tire pressure sensor device setting tool is to employ a wireless technique, enabling said tire pressure sensor device setting tool to read in the ID (identification) code of said tire pressure sensor device.

3. The tire pressure sensor device setting method as claimed in claim 1, wherein the step of inputting the ID (identification) code of said tire pressure sensor device to be set into said tire pressure sensor device setting tool is to employ an optical barcode scanning technique, enabling said tire pressure sensor device setting tool to read in the ID (identification) code of said tire pressure sensor device.

4. The tire pressure sensor device setting method as claimed in claim 1, wherein the step of inputting the ID (identification) code of said tire pressure sensor device to be set into said tire pressure sensor device setting tool is to manually input the ID (identification) code of said tire pressure sensor device into said tire pressure sensor device setting tool.

5. The tire pressure sensor device setting method as claimed in claim 1, wherein the step of writing said communication protocol into said tire pressure sensor device is done by using a cable to download said communication protocol from said tire pressure sensor device setting tool onto said tire pressure sensor device.

6. The tire pressure sensor device setting method as claimed in claim 1, wherein the step of writing said communication protocol into said tire pressure sensor device is done by employing a wireless transmission technique to transmit said communication protocol from said tire pressure sensor device setting tool to said tire pressure sensor device.

7. The tire pressure sensor device setting method as claimed in claim 1, wherein after the step of writing said communication protocol into said tire pressure sensor device, said tire pressure sensor device setting tool provides a diagnostic test signal to said tire pressure sensor device.

8. The tire pressure sensor device setting method as claimed in claim 7, wherein said tire pressure sensor sends a response signal back to said tire pressure sensor device setting tool after received said diagnostic test signal from said tire pressure sensor device setting tool.

9. The tire pressure sensor device setting method as claimed in claim 8, wherein said response signal contains the ID (identification) code of said tire pressure sensor and the data of selected option of right-sided tire or left-sided tire.

10. The tire pressure sensor device setting method as claimed in claim 1, wherein step (b) of operating said tire pressure sensor device setting tool to select vehicle brand, vehicle model and model year and step (c) of inputting the ID (identification) code of the tire pressure sensor device to be set into said tire pressure sensor device setting tool are sequentially exchangeable.

## Patentansprüche

1. Reifendruck-Sensoreinrichtungs-Verfahren, welches die Schritte umfasst:
(a) Bereitstellen eines Reifendruck-Sensoreinrichtungs-Einstellwerkzeugs, das eine Nutzerschnittstelle zum Betrieb durch einen Nutzer umfasst;
(b) Betreiben des Reifendruck-Sensoreinrichtungs-Einstellwerkzeugs, um eine Fahrzeugmarke, ein Fahrzeug-Modell und das Modell-Jahr zu wählen;
(c) Eingeben des ID- (Identifizierung)s Codes der Reifendruck-Sensoreinrichtung, um in dem Reifendruck-Sensoreinrichtungs-Einstellwerkzeug eingestellt zu sein ;
(d) Wählen der Option rechts-seitiger Reifen oder links-seitiger Reifen;
wobei das Reifendruck-Sensoreinrichtungs-Verfahren weiter **dadurch gekennzeichnet ist, dass** es die folgenden Schritte umfasst:
(e) das Reifendruck-Sensoreinrichtungs-Einstellwerkzeug gibt die Daten der Fahrzeug-Marke, des Fahrzeug-Modells und des Modell-Jahrs, den ID-Codes der Reifendruck-Sensoreinrichtung und den Inhalt der gewählten Option, rechts-seitiger Reifen oder links-seitiger Reifen, in ein Kommunikationsprotokoll aus; und
(f) Schreiben des Kommunikationsprotokolls in die Reifendruck-Sensoreinrichtung.

2. Reifendruck-Sensoreinrichtungs-Verfahren nach Anspruch 1, wobei bei dem Schritt der Eingabe des in das Reifendruck-Sensoreinrichtungs-Einstellwerkzeug eingestellten ID-(Identifizierungs-) Codes der Reifendruck-Sensoreinrichtung eine Drahtlos-Technologie verwendet wird, welche ermöglicht, dass der ID (Identifizierungs-) Code der Reifendruck-Sensoreinrichtung in das Reifendruck-Sensoreinrichtungs-Einstellwerkzeug eingespeichert werden kann.

3. Reifendruck-Sensoreinrichtungs-Verfahren nach Anspruch 1, wobei bei dem Schritt der Eingabe des in das Reifendruck-Sensoreinrichtungs-Einstellwerkzeug eingestellten ID-(Identifizierungs-) Codes der Reifendruck-Sensoreinrichtung eine optische Barcode-Scan-Technologie eingesetzt wird, welche ermöglicht, dass der ID (Identifizierungs-) Code der Reifendruck-Sensoreinrichtung in das Reifendruck-Sensoreinrichtungs-Einstellwerkzeug eingespeichert werden kann.

4. Reifendruck-Sensoreinrichtungs-Verfahren nach Anspruch 1, wobei bei dem Schritt der Eingabe des in das Reifendruck-Sensoreinrichtungs-Einstellwerkzeug eingestellten ID-(Identifizierungs-) Codes der Reifendruck-Sensoreinrichtung der ID (Identifizierungs-) Code der Reifendruck-Sensoreinrichtung in das Reifendruck-Sensoreinrichtungs-Einstellwerkzeug manuell eingegeben wird.

5. Reifendruck-Sensoreinrichtungs-Verfahren nach Anspruch 1, wobei der Schritt des Schreibens des Kommunikationsprotokolls in die Reifendruck-Sensoreinrichtung unter Verwendung eines Kabels durchgeführt wird, um das Kommunikationsprotokoll von dem Reifendruck-Sensoreinrichtungs-Einstellwerkzeug auf die Reifendruck-Sensoreinrichtung herunter zu laden.

6. Reifendruck-Sensoreinrichtungs-Verfahren nach Anspruch 1, wobei der Schritt des Schreibens des Kommunikationsprotokolls in die Reifendruck-Sensoreinrichtung unter Verwendung einer Drahtlos-Übertragungstechnologie durchgeführt wird, um das Kommunikationsprotokoll von dem Reifendruck-Sensoreinrichtungs-Einstellwerkzeug auf die Reifendruck-Sensoreinrichtung zu übertragen.

7. Reifendruck-Sensoreinrichtungs-Verfahren nach Anspruch 1, wobei nach dem Schritt des Schreibens des Kommunikationsprotokolls in die Reifendruck-Sensoreinrichtung das Reifendruck-Sensoreinrichtungs-Einstellwerkzeug ein Diagnose-Testsignal an die Reifendruck-Sensoreinrichtung liefert.

8. Reifendruck-Sensoreinrichtungs-Verfahren nach Anspruch 7, wobei der Reifendruck-Sensor ein Antwortsignal zurück an das Reifendruck-Sensoreinrichtungs-Einstellwerkzeug sendet, nachdem das Diagnose-Testsignal von dem Reifendruck-Sensoreinrichtungs-Einstellwerkzeug erhalten wurde.

9. Reifendruck-Sensoreinrichtungs-Verfahren nach Anspruch 8, wobei das Antwortsignal den ID (Identifizierungs-) Code des Reifendruck-Sensors und die Daten der gewählten Option, rechts-seitiger Reifens oder links-seitiger Reifens enthält.

10. Reifendruck-Sensoreinrichtungs-Verfahren nach Anspruch 1, wobei Schritt (b) des Betriebs des Reifendruck-Sensoreinrichtungs-Einstellwerkzeugs zum Wählen der Fahrzeug-Marke, des Fahrzeug-Modells und des Modell-Jahrs und der Schritt (c) der Eingabe des in das Reifendruck-Sensoreinrichtungs-Einstellwerkzeug eingestellten ID (Identifizierungs-) Codes der Reifendruck-Sensoreinrichtung in der Reihenfolge austauschbar sind.

## Revendications

1. Procédé de réglage de dispositif de capteur de pression de pneu, comprenant les étapes de:
(a) fourniture d'un outil de réglage de dispositif de capteur de pression de pneu qui comprend une interface utilisateur pour un fonctionnement par un utilisateur ;
(b) mise en oeuvre dudit outil de réglage de dispositif de capteur de pression de pneu afin de sélectionner la marque du véhicule, le modèle du véhicule et l'année du modèle ;
(c) saisie du code d'identification (ID) de dispositif de capteur de pression de pneu à régler dans ledit outil de réglage de dispositif de capteur de pression de pneu ;
(d) sélection de l'option de pneu côté droit ou de pneu côté gauche ; ledit procédé de réglage de dispositif de capteur de pression de pneu étant en outre **caractérisé en ce qu'**il comprend les étapes suivantes :
(e) édition, par ledit outil de réglage de dispositif de capteur de pression de pneu, des données de la marque du véhicule, du modèle du véhicule et l'année du modèle, du code d'identification (ID) dudit dispositif de capteur de pression de pneu et du contenu de l'option sélectionnée de pneu côté droit ou de pneu côté gauche dans un protocole de communication ; et
(f) écriture dudit protocole de communication dans ledit dispositif de capteur de pression de pneu.

2. Procédé de réglage de dispositif de capteur de pression de pneu selon la revendication 1, dans lequel l'étape de saisie du code d'identification (ID) dudit dispositif de capteur de pression de pneu à régler dans ledit outil de réglage de dispositif de capteur de pression de pneu consiste à utiliser une technique non filaire, permettant audit outil de réglage de dispositif de capteur de pression de pneu, de lire le code d'identification (ID) audit dispositif de capteur de pression de pneu.

3. Procédé de réglage de dispositif de capteur de pression de pneu selon la revendication 1, dans lequel l'étape de saisie du code d'identification (ID) dudit dispositif de capteur de pression de pneu à régler dans ledit outil de réglage de dispositif de capteur de pression de pneu consiste à utiliser une technique de balayage optique de codes-barres, permettant audit outil de réglage de dispositif de capteur de pression de pneu de lire le code d'identification (ID) dudit dispositif de capteur de pression de pneu.

4. Procédé de réglage de dispositif de capteur de pression de pneu selon la revendication 1, dans lequel l'étape de saisie du code d'identification (ID) dudit dispositif de capteur de pression de pneu à régler dans ledit outil de réglage de dispositif de capteur de pression de pneu consiste à saisir manuellement le code d'identification (ID) dudit dispositif de capteur de pression de pneu dans ledit outil de réglage de dispositif de capteur de pression de pneu.

5. Procédé de réglage de dispositif de capteur de pression de pneu selon la revendication 1, dans lequel l'étape d'écriture dudit protocole de communication dans ledit dispositif de capteur de pression de pneu est effectuée en utilisant un câble pour télécharger ledit protocole de communication depuis ledit outil de réglage de dispositif de capteur de pression de pneu sur ledit dispositif de capteur de pression de pneu.

6. Procédé de réglage de dispositif de capteur de pression de pneu selon la revendication 1, dans lequel l'étape d'écriture dudit protocole de communication dans ledit dispositif de capteur de pression de pneu est effectuée en utilisant une technique de transmission non filaire pour transmettre ledit protocole de communication depuis ledit outil de réglage de dispositif de capteur de pression de pneu audit dispositif de capteur de pression de pneu.

7. Procédé de réglage de dispositif de capteur de pression de pneu selon la revendication 1, dans lequel, après l'étape d'écriture dudit protocole de communication dans ledit dispositif de capteur de pression de pneu, ledit outil de réglage de dispositif de capteur de pression de pneu fournit un signal de test de diagnostic audit dispositif de capteur de pression de pneu.

8. Procédé de réglage de dispositif de capteur de pression de pneu selon la revendication 7, dans lequel ledit capteur de pression de pneu envoie en retour un signal de réponse audit outil de réglage de dispositif de capteur de pression de pneu après réception dudit signal de test de diagnostic depuis ledit outil de réglage de dispositif de capteur de pression de pneu.

9. Procédé de réglage de dispositif de capteur de pression de pneu selon la revendication 8, dans lequel ledit signal de réponse contient le code d'identification (ID) dudit capteur de pression de pneu et les données de l'option sélectionnée de pneu côté droit ou de pneu côté gauche.

10. Procédé de réglage de dispositif de capteur de pression de pneu selon la revendication 1, dans lequel étape (b) de mise en oeuvre dudit outil de réglage de dispositif de capteur de pression de pneu afin de sélectionner la marque du véhicule, le modèle du véhicule et l'année du modèle et l'étape (c) de saisie du code d'identification ID) de dispositif de capteur de pression de pneu à régler dans ledit outil de réglage de dispositif de capteur de pression de pneu sont séquentiellement échangeables.
